(19) Europäisches Patentamt
European Patent Office
Office européen des brevets

(11) EP 4 693 490 A1

(12) EUROPEAN PATENT APPLICATION
published in accordance with Art. 153(4) EPC

(43) Date of publication:
11.02.2026 Bulletin 2026/07

(21) Application number: 24781094.8

(22) Date of filing: 19.03.2024

(51) International Patent Classification (IPC):
$H01M\ 4/525^{(2010.01)}$   $H01M\ 4/505^{(2010.01)}$
$H01M\ 4/38^{(2006.01)}$   $H01M\ 4/36^{(2006.01)}$
$H01M\ 4/62^{(2006.01)}$   $H01M\ 4/131^{(2010.01)}$
$H01M\ 4/02^{(2006.01)}$

(52) Cooperative Patent Classification (CPC):
H01M 4/02; H01M 4/131; H01M 4/36; H01M 4/38;
H01M 4/505; H01M 4/525; H01M 4/62; Y02E 60/10

(86) International application number:
PCT/KR2024/003421

(87) International publication number:
WO 2024/205103 (03.10.2024 Gazette 2024/40)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 31.03.2023 KR 20230043093

(71) Applicants:
• POSCO Holdings Inc.
Pohang-si, Gyeongsangbuk-do 37859 (KR)
• Research Institute of Industrial Science &
Technology
Pohang-si, Gyeongsangbuk-do 37673 (KR)

(72) Inventors:
• Hong, Ki Joo
Incheon 21986 (KR)

• Lee, Jiho
Incheon 22008 (KR)
• Kim, Ju Seong
Seoul 07542 (KR)
• Jung, Yongjo
Incheon 22002 (KR)
• Kim, Yong-Il
Incheon 22003 (KR)
• Nam, Sang Cheol
Seoul 02587 (KR)
• Han, Juhyeong
Incheon 21982 (KR)

(74) Representative: Pfenning, Meinig & Partner mbB
Patent- und Rechtsanwälte
Theresienhöhe 11a
80339 München (DE)

(54) CATHODE ACTIVE MATERIAL FOR LITHIUM SECONDARY BATTERY, MANUFACTURING METHOD FOR SAME, AND LITHIUM SECONDARY BATTERY COMPRISING SAME

(57) The present invention relates to a positive electrode active material for a lithium secondary battery, which is a single-particle-type nickel-containing layered lithium transition metal oxide, having a volume-based average particle diameter (Dv50) of from 5 μm to 8 μm, comprising small-sized single particles formed of one primary particle and medium-sized quasi-single particles formed of a plurality of primary particles, and exhibiting maximum peaks in a particle size distribution curve based on number in a particle diameter range of from 0.7 μm to 1.2 μm and in a particle diameter range of from 2.5 μm to 4.0 μm.

[Fig. 1]

EP 4 693 490 A1

## Description

### [Technical Field]

The present invention relates to a positive electrode active material for a lithium secondary battery, a method for manufacturing the same, and a lithium secondary battery comprising the same, and more specifically, to a single-particle-type positive electrode active material for a lithium secondary battery, a method for manufacturing the same, and a lithium secondary battery comprising the same.

### [Background Art]

As the supply of electric vehicles for achieving carbon neutrality expands and the demand for energy storage devices such as ESS for the use of renewable energy rapidly increases, lithium-ion batteries have become indispensable and core energy storage devices. In particular, the properties of lithium-ion batteries are greatly affected by the positive electrode material, and therefore, research on positive electrode materials occupies the largest proportion in lithium-ion battery research.

Among positive electrode materials, research on NCM positive electrode materials in which cobalt and manganese are substituted into nickel-based layered positive electrode active materials has been actively conducted. Conventionally, secondary particle active materials formed by agglomeration of primary particles have been mainly studied. However, such secondary particle active materials have large specific surface areas and low particle strength, resulting in problems such as lifetime degradation due to crack generation and gas evolution. Accordingly, development has progressed toward single-particle positive electrode materials composed of one primary particle, which are mainly produced as small-sized positive electrode materials in bimodal positive electrode materials having an average particle diameter of about 3 to 5 $\mu$m.

The small-sized single particles have excellent mechanical particle strength, thereby exhibiting superior lifetime and stability. However, since the particle size is small, the tap density is low, which ultimately imposes a limitation on increasing the energy density of the electrode.

To solve this problem, attempts have been made to increase the particle size of single particles to increase tap density. However, as the particle size of single particles increases, the lithium ion migration distance also becomes longer, which deteriorates the electrochemical properties related to lithium diffusion (i.e., capacity, charge/discharge efficiency, output characteristics, etc.).

### [Detailed Description of the Invention]

### [Technical Problem]

In view of the above, an object of the present invention is to provide a positive electrode active material for a lithium secondary battery, which is a single-particle-type positive electrode active material capable of improving electrode energy density while simultaneously enhancing the capacity, charge/discharge efficiency, and lifetime characteristics of a battery, as well as a method for manufacturing the same and a lithium secondary battery comprising the same.

### [Technical Solution]

According to one embodiment of the present invention, there is provided a positive electrode active material for a lithium secondary battery, which is a single-particle-type nickel-containing layered lithium transition metal oxide, having a volume-based average particle diameter (Dv50) of from 5 $\mu$m to 8 $\mu$m, comprising small-sized single particles formed of one primary particle and medium-sized quasi-single particles formed of a plurality of primary particles, and exhibiting peaks in a particle size distribution curve based on number in a particle diameter range of from 0.7 $\mu$m to 1.2 $\mu$m and in a particle diameter range of from 2.5 $\mu$m to 4.0 $\mu$m.

The positive electrode active material may have a compaction density of 3.6 g/cc or greater after application of a pressure of 9 tons.

A number ratio of the single particles to the quasi-single particles may be from 8:2 to 5:5.

The positive electrode active material for a lithium secondary battery may satisfy the following Equation 1:

$$[\text{Equation 1}]$$

$$\mathrm{Dv}50 - \mathrm{Dn}50 \geq 3.5 \ \mu\mathrm{m}$$

The lithium transition metal oxide may comprise 60 mol% or more of nickel based on the total moles of transition metals.

The lithium transition metal oxide may further comprise a grain growth-promoting element selected from Zr, Al, B, or a combination thereof.

A content of the grain growth-promoting element may be from 0.1 mol% to 1 mol% based on the total moles of transition metals.

The positive electrode active material may further comprise a coating layer disposed on the lithium transition metal oxide, the coating layer comprising Co, Al, or a combination thereof.

The lithium transition metal oxide may be represented by the following Chemical Formula 1:

$$[\text{Chemical Formula 1}] \qquad Li_a[Ni_xCo_yMnzM_1w_1M_2w_2]O_2$$

wherein $0.8 \le a \le 1.2$, $0.60 \le x < 1$, $0 \le y \le 0.4$, $0 \le z \le 0.4$, $0 \le w_1 \le 0.01$, $0 \le w_2 \le 0.2$, and $x + y + z + w_1 + w_2 = 1$; $M_1$ is Zr, Al, B, or a combination thereof; and $M_2$ is Y, Mg, Ti, Nb, W, Sc, Si, V, Fe, Y, Mo, Ce, Hf, Ta, La, Sr, or a combination thereof.

According to another embodiment of the present invention, there is provided a positive electrode for a lithium secondary battery comprising the aforementioned positive electrode active material.

According to still another embodiment of the present invention, there is provided a lithium secondary battery comprising the positive electrode.

[Advantageous Effects]

According to one embodiment of the present invention, the positive electrode active material for a lithium secondary battery has a volume-based average particle diameter of medium-sized particles and includes both small-sized and medium-sized particles, thereby significantly improving electrode energy density.

Furthermore, according to one embodiment of the present invention, since the small-sized positive electrode material is a single particle formed of one primary particle and the medium-sized positive electrode material is a quasi-single particle formed of a plurality of primary particles, the capacity, charge/discharge efficiency, and lifetime characteristics of the battery can be uniformly improved.

[Brief Description of the Drawings]

FIG. 1 is an SEM image of a positive electrode active material prepared according to Example 1.
FIG. 2 is an SEM image of a positive electrode active material prepared according to Comparative Example 1.
FIG. 3 is an SEM image of a positive electrode active material prepared according to Comparative Example 2.
FIG. 4 is a graph of particle size distribution curves based on number for the positive electrode active materials prepared according to Example 1, Comparative Example 1, and Comparative Example 2.

[Mode for Carrying Out the Invention]

The terms such as first, second, and third are used to describe various parts, components, regions, layers, and/or sections, but are not limited thereto. These terms are used only to distinguish one part, component, region, layer, or section from another part, component, region, layer, or section. Therefore, a first part, component, region, layer, or section described below may be referred to as a second part, component, region, layer, or section within a scope not departing from the spirit of the present invention.

The terminology used herein is intended only to describe particular embodiments and is not intended to limit the present invention. Singular forms as used herein are intended to include plural forms as well, unless the context clearly indicates otherwise. The term "comprising/including/having/containing" as used in the specification specifies the presence of a stated feature, region, integer, step, operation, element, and/or component, but does not preclude the presence or addition of one or more other features, regions, integers, steps, operations, elements, and/or components.

When it is stated that a portion is "on" or "over/above" another portion, it may be directly on or over the other portion, or another portion may be interposed therebetween. In contrast, when it is stated that a portion is "directly on" or "directly over" another portion, no other portion is interposed therebetween.

Unless otherwise defined, all technical and scientific terms used herein have the same meaning as commonly understood by those of ordinary skill in the art to which the present invention belongs. Terms defined in commonly used dictionaries should be interpreted as consistent with the related technical literature and the disclosures herein, and unless specifically defined, are not to be interpreted as having an idealized or overly formal meaning.

Unless otherwise specified, "%" means weight percent, and 1 ppm means 0.0001 wt%.

In this specification, the expression "a combination(s) thereof" in a Markush-type expression means a mixture or combination of one or more selected from the group of components described in the Markush expression, and thus means the inclusion of one or more selected from the group.

Hereinafter, embodiments of the present invention will be described in detail so that those skilled in the art can readily practice the invention. However, the invention may be embodied in various different forms and should not be construed as limited to the embodiments set forth herein.

According to one embodiment of the present invention, there is provided a positive electrode active material for a lithium secondary battery, which is a single-particle-type nickel-containing layered lithium transition metal oxide, having a volume-based average particle diameter (Dv50) of from 5 $\mu$m to 8 $\mu$m, comprising small-sized single particles formed of one primary particle and medium-sized quasi-single particles formed of a plurality of primary particles, and exhibiting peaks in a particle size distribution curve based on number in a particle diameter range of from 0.7 $\mu$m to 1.2 $\mu$m and in a particle diameter range of from 2.5 $\mu$m to 4.0 $\mu$m.

The positive electrode active material for a lithium secondary battery according to one embodiment of the present invention is composed of single-particle-type particles. In this specification, the term "single particle" is used to distinguish from the positive electrode active material particles of secondary particle type, which have been conventionally used and are formed by agglomeration of several tens to several hundreds of primary particles, and includes a single particle formed of one primary particle and an aggregate particle formed of 30 or fewer primary particles. The term "secondary particle" means an aggregate, i.e., a secondary structure, in which primary particles are agglomerated with each other by physical or chemical bonding, even without an intentional agglomeration or assembly process.

The term "primary particle" means the smallest particle unit distinguishable as one mass when the cross-section of the positive electrode active material is observed through a scanning electron microscope (SEM), and may be formed of one crystallite or of a plurality of crystallites.

Since the positive electrode active material for a lithium secondary battery according to one embodiment of the present invention is composed of single-particle-type particles, the particle strength is increased, thereby suppressing particle breakage during rolling, preventing generation of cracks between primary particles upon repeated charging and discharging, and reducing gas evolution due to side reactions with the electrolyte by having a small specific surface area.

The positive electrode active material for a lithium secondary battery according to one embodiment of the present invention has a volume-based average particle diameter (Dv50) of from 5 $\mu$m to 8 $\mu$m, and more specifically, from 5.2 $\mu$m to 8 $\mu$m, from 5.5 $\mu$m to 8 $\mu$m, or from 6 $\mu$m to 8 $\mu$m. In this specification, the term "volume-based average particle diameter (Dv50)" may be defined as the particle diameter corresponding to 50% of cumulative volume in a particle size distribution curve. The average particle diameter (Dv50) may be measured, for example, by using a laser diffraction method. The laser diffraction method can generally measure particle diameters ranging from the submicron region up to several millimeters, providing highly reproducible and highly resolvable results.

As the average particle diameter of the positive electrode active material is sufficiently large within the above range, the tap density can be further improved compared to conventional small-sized single particles, thereby significantly improving electrode energy density.

In addition, the positive electrode active material for a lithium secondary battery according to one embodiment of the present invention includes both small-sized single particles formed of one primary particle and medium-sized quasi-single particles formed of a plurality of primary particles. In this specification, the term "single particle" refers to a single particle formed of one primary particle, and the term "quasi-single particle" refers to a single particle formed of a plurality of primary particles.

Since the positive electrode active material includes both small-sized and medium-sized particles, the effect of improving electrode energy density can be maximized. In particular, since the positive electrode active material according to the present invention has a volume-based average particle diameter in the medium-sized range, wherein the small-sized particles are single particles and the medium-sized particles are quasi-single particles, the capacity, charge/-discharge efficiency, and lifetime characteristics of the battery can be improved compared to active materials composed of only single particles or only quasi-single particles.

Further, the quasi-single particles may be spherical. Accordingly, the electrochemical properties of the battery can be further enhanced. In this specification, the term "spherical" does not necessarily mean perfectly spherical but includes quasi-spherical shapes.

The positive electrode active material for a lithium secondary battery according to one embodiment of the present invention exhibits peaks in a particle size distribution curve based on number in a particle diameter range of from 0.7 $\mu$m to 1.2 $\mu$m and in a particle diameter range of from 2.5 $\mu$m to 4.0 $\mu$m. In this specification, the particle size distribution curve based on number of the active material refers to the particle size distribution curve measured by using a Mastersizer 3000 instrument manufactured by Malvern. This product is one of the most widely used laser diffraction particle size analyzers worldwide. Particularly, it provides particle analysis solutions down to the nanometer level, and is thus suitable for analyzing active materials such as in the present invention, which contain a large number of small-sized particles.

In this case, most particles forming the peak in the range of 0.7 $\mu$m to 1.2 $\mu$m may be small-sized single particles, and most particles forming the peak in the range of 2.5 $\mu$m to 4.0 $\mu$m may be medium-sized quasi-single particles. When the peak ranges of the particle size distribution curve satisfy the above ranges, the effects of improved electrode energy density and electrochemical properties of the battery as mentioned above can be desirably realized.

In particular, the positive electrode active material for a lithium secondary battery may have a number-based average particle diameter (Dn50) of 1.5 $\mu$m or less. In this specification, the number-based average particle diameter (Dn50) may be defined as the particle diameter corresponding to 50% of cumulative number in a particle size distribution curve. The number-based average particle diameter (Dn50) may be measured, for example, by using a laser diffraction method.

That is, in the positive electrode active material according to one embodiment, the number-based average particle diameter (Dn50) within the above range may be considerably smaller than the volume-based average particle diameter (Dv50) in the medium particle size range as described above. This means that a large number of small-sized active material particles are present, and as a result, since many small-sized particles with excellent particle strength exist, the small-sized particles effectively fill the voids between the medium-sized particles, thereby dramatically improving rolling density. In addition, due to the short diffusion distance of the small-sized particles, the capacity and efficiency of the positive electrode active material may also be improved.

More specifically, the positive electrode active material for a lithium secondary battery may satisfy the following Equation (1):

$$[\text{Equation 1}]$$

$$\mathrm{Dv50} - \mathrm{Dn50} \geq 3.5\ \mu\mathrm{m}$$

The technical significance of the positive electrode active material satisfying Equation (1) is the same as described above.

In addition, the positive electrode active material for a lithium secondary battery may have a number-based particle diameter (Dn10) of 1.0 $\mu$m or less. Furthermore, the positive electrode active material for a lithium secondary battery may have a number-based particle diameter (Dn90) of from 4 $\mu$m to 5.8 $\mu$m. In this specification, the number-based particle diameters (Dn10) and (Dn90) may be defined as the particle diameters corresponding to 10% and 90% of cumulative number, respectively, in a particle size distribution curve.

When the number-based particle diameters (Dn10) and (Dn90) of the positive electrode active material satisfy the above ranges, the electrochemical properties of the battery can be more desirably realized.

In addition, the positive electrode active material for a lithium secondary battery according to one embodiment of the present invention may have a compaction density of 3.6 g/cc or greater after application of a pressure of 9 tons. This property corresponds to the rolling density of the active material during electrode fabrication. With such a large compaction density, the electrode energy density can be improved. In this specification, the compaction density of the active material after application of a pressure of 9 tons may be measured by loading 3 g of an active material sample into a pellet having a diameter of 13 mm, applying a pressure of 9 tons using a hydraulic press manufactured by Caver, and then determining the density from the change in pellet height before and after the pressure application, according to the following equation:

Density after application of 9 tons of pressure = weight of active material sample (3 g) / ($\pi$ $\times$ (1.3 cm / 2)$^2$ $\times$ (change in pellet height before and after pressure application))     [Calculation Formula 1]

In Calculation Formula 1, $\pi$ denotes the circular constant.

Meanwhile, the average number of primary particles in a quasi-single particle may be 20 or fewer, and more specifically, 15 or fewer. When the average number of primary particles in a quasi-single particle becomes excessively large, the particle acquires polycrystalline properties, which weakens particle strength and increases the specific surface area, thereby causing deterioration in battery lifetime characteristics.

In addition, the number ratio of the single particles to the quasi-single particles may be from 8:2 to 5:5. In this specification, the number ratio of the single particles to the quasi-single particles may be determined from a (25 $\mu$m) $\times$ (20 $\mu$m) two-dimensional SEM (scanning electron microscope) image at 5,000$\times$ magnification, by measuring the numbers of single particles and quasi-single particles using image analysis software. When the number ratio of the single particles to the quasi-single particles satisfies the above range, the effects of improving electrode energy density and enhancing the electrochemical properties of the battery as described above can be more desirably realized.

Meanwhile, the lithium transition metal oxide may comprise 60 mol% or more of nickel based on the total moles of transition metals, and more specifically 70 mol% or more, 80 mol% or more, or 90 mol% or more. With such a high nickel content, high capacity characteristics can be realized.

The lithium transition metal oxide may further comprise a grain growth-promoting element selected from Zr, Al, B, or a combination thereof. By including a grain growth-promoting element in the lithium transition metal oxide, the calcination temperature required for formation of the lithium transition metal oxide can be lowered, thereby preventing crystal defects such as an increase in cation mixing ratio due to high-temperature calcination, and efficiently increasing the average particle size of single particles during the calcination process.

The content of the grain growth-promoting element may be from 0.1 mol% to 1 mol% based on the total moles of transition metals, and more specifically from 0.3 mol% to 1 mol%. More specifically, the content of Zr may be from 0.1 mol% to 0.3 mol% based on the total moles of transition metals. In addition, the content of Al may be from 0.2 mol% to 1 mol% based on the total moles of transition metals. Furthermore, the content of B may be from 0.1 mol% to 1 mol% based on the total moles of transition metals. When the content of the grain growth-promoting element satisfies the above range, both the effect of the addition of the grain growth-promoting element as described above and the effect of preventing deterioration of electrochemical properties due to excessive addition can be realized.

The positive electrode active material may further comprise a coating layer disposed on the lithium transition metal oxide, the coating layer comprising Co, Al, or a combination thereof. By further comprising a coating layer having the above composition, side reactions with the electrolyte can be suppressed, structural stability of the active material can be enhanced, and lifetime characteristics of the battery can be further improved.

The lithium transition metal oxide according to the present invention may be more specifically represented by the following Chemical Formula 1:

$$[\text{Chemical Formula 1}] \qquad \text{Li}_a[\text{Ni}_x\text{Co}_y\text{Mn}z\text{M}_1w_1\text{M}_2w_2]\text{O}_2$$

wherein $0.8 \leq a \leq 1.2$, $0.60 \leq x < 1$, $0 \leq y \leq 0.4$, $0 \leq z \leq 0.4$, $0 \leq w_1 \leq 0.01$, $0 \leq w_2 \leq 0.2$, and $x + y + z + w_1 + w_2 = 1$; $M_1$ is Zr, Al, B, or a combination thereof; and $M_2$ is Y, Mg, Ti, Nb, W, Sc, Si, V, Fe, Y, Mo, Ce, Hf, Ta, La, Sr, or a combination thereof.

In the lithium transition metal oxide of Chemical Formula 1, lithium may be included in an amount corresponding to a, that is, $0.8 \leq a \leq 1.2$. If the value of a is too small, the capacity may decrease, while if the value of a is too large, the strength of the calcined positive electrode active material may increase, making pulverization difficult, and gas generation may increase due to an increase in lithium by-products. Considering both the effect of improving capacity characteristics of the positive electrode active material through control of lithium content and the balance of sinterability during preparation of the active material, lithium is preferably included in an amount of $0.9 \leq a \leq 1.1$.

In the lithium transition metal oxide of Chemical Formula 1, nickel may be included in an amount corresponding to x, that is, $0.60 \leq x < 1$, $0.60 \leq x \leq 0.97$, $0.80 \leq x \leq 0.97$, or $0.90 \leq x \leq 0.97$. If the nickel content is too low, it may be difficult to achieve high capacity of the battery, whereas if the nickel content is too high, the lifetime and safety of the battery may deteriorate due to reduced structural stability of the active material.

In the lithium transition metal oxide of Chemical Formula 1, cobalt may be included in an amount corresponding to y, that is, $0 \leq y \leq 0.4$, $0 \leq y \leq 0.2$, or $0 \leq y \leq 0.1$. If the cobalt content is too low, it may be difficult to simultaneously achieve sufficient rate characteristics and high powder density of the active material. If the cobalt content is too high, the cost of raw materials may increase overall and the reversible capacity may decrease.

In the lithium transition metal oxide of Chemical Formula 1, manganese may be included in an amount corresponding to z, that is, $0 \leq z \leq 0.4$. If the manganese content is too low, the production cost may increase and the stability of the active material may decrease. If the manganese content is too high, the capacity and output characteristics of the battery may deteriorate.

In the lithium transition metal oxide of Chemical Formula 1, $M_1$ may be included in an amount corresponding to $w_1$, that is, $0 \leq w_1 \leq 0.01$, wherein $M_1$ is a grain growth-promoting element selected from Zr, Al, B, or a combination thereof.

In the lithium transition metal oxide of Chemical Formula 1, $M_2$ may be included in an amount corresponding to $w_2$, that is, $0 \leq w_2 \leq 0.2$, wherein $M_2$ is another doping element selected from Y, Mg, Ti, Nb, W, Sc, Si, V, Fe, Y, Mo, Ce, Hf, Ta, La, Sr, or a combination thereof.

According to another embodiment of the present invention, a method for manufacturing a positive electrode active material for a lithium secondary battery comprises:

preparing a nickel-containing transition metal precursor;
forming a mixture comprising the transition metal precursor and a lithium raw material, and performing a primary calcination (main calcination) to form a lithium transition metal oxide in which the number of primary particles has grown;
performing a secondary calcination (post-calcination) of the lithium transition metal oxide; and
pulverizing the post-calcined lithium transition metal oxide to form a lithium transition metal oxide comprising small-sized single particles formed of one primary particle and medium-sized quasi-single particles formed of a plurality of primary particles.

Hereinafter, each step of the method for manufacturing a positive electrode active material for a lithium secondary battery according to another embodiment of the present invention will be described in detail.

First, a nickel-containing transition metal precursor is prepared. The transition metal precursor may be a transition metal hydroxide or a transition metal oxide. The transition metal hydroxide may be prepared as a precursor for a positive electrode active material, for example, by coprecipitation of a transition metal-containing solution comprising a nickel raw material and optionally a cobalt raw material or a manganese raw material with the addition of a chelating agentcontaining solution and a pH-adjusting solution. The transition metal oxide may be prepared by calcining the transition metal hydroxide in an oxygen or air atmosphere at a temperature of 250°C to 650°C.

At this time, the transition metal precursor may have an average particle diameter (D50) of 5 $\mu$m or greater. When the average particle diameter of the transition metal precursor satisfies the above range, a single-particle-type lithium transition metal oxide having a medium particle size, which is the target of the present invention, can be more easily obtained.

Next, a mixture comprising the transition metal precursor and a lithium raw material is formed, followed by primary calcination to form a lithium transition metal oxide in which the number of primary particles has grown. More specifically, through the primary calcination, a lithium transition metal oxide in the form of a single particle composed of a plurality of primary particles may be formed.

Subsequently, the grown lithium transition metal oxide is subjected to secondary calcination. The method for manufacturing the active material according to one embodiment of the present invention proceeds with calcination divided into two stages as described above. In this case, the temperature of the primary calcination may be higher than that of the secondary calcination, and the time of the primary calcination may be shorter than that of the secondary calcination. By high-temperature, short-duration primary calcination, the number of primary particles within a single particle can be grown to an appropriate range. By low-temperature, long-duration secondary calcination, rearrangement of the crystals can be induced, thereby relieving internal stress increased during high-temperature primary calcination and reducing the occurrence of nickel cation mixing. Furthermore, through the series of high-temperature short-duration and low-temperature long-duration calcinations, formation of an active material including small-sized single particles and medium-sized quasi-single particles can be facilitated.

More specifically, in conventional methods for preparing single particles, a single-step calcination process at high temperature for a long time causes problems such as nickel cation mixing and generation of rock-salt impurity phases. In contrast, the manufacturing method according to one embodiment of the present invention prevents such problems by high-temperature, short-duration primary calcination and low-temperature, long-duration secondary calcination, and grows the number of primary particles in a single particle to an appropriate extent, thereby inducing the finally formed active material to include small-sized single particles and medium-sized quasi-single particles.

In this case, the temperature of the primary calcination may be from 850°C to 900°C, and the time of the primary calcination may be from 5 hours to 9 hours. The temperature of the secondary calcination may be from 760°C to 820°C, and the time of the secondary calcination may be from 9 hours to 12 hours. When the temperatures and times of the primary and secondary calcinations satisfy the above ranges, the composition and physical properties of the active material targeted by the present invention can be more easily achieved.

The lithium raw material may include lithium-containing sulfates, nitrates, acetates, carbonates, oxalates, citrates, halides, hydroxides, or oxyhydroxides, without particular limitation so long as they are soluble in water. Specifically, the lithium raw material may be $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $Li_3C_6H_5O_7$, or a combination thereof, but is not limited thereto.

The calcination may be performed in an oxygen or air atmosphere. When calcination is performed under such an atmosphere, the local oxygen partial pressure increases, thereby improving the crystallinity of the positive electrode active material.

Meanwhile, other doping elements may be doped during the step of forming the lithium transition metal oxide. In this case, the other doping element may be doped into the lithium transition metal oxide by additionally introducing a doping raw material during formation of the mixture and subjecting the mixture to calcination.

Further, the transition metal precursor prepared in the precursor preparation step or the lithium transition metal oxide formed in the step of forming the lithium transition metal oxide by primary calcination may further comprise a grain growth-promoting element of Zr, Al, B, or a combination thereof. That is, the grain growth-promoting element may be doped during the transition metal precursor formation step, or may be doped during the lithium transition metal oxide formation step.

In this case, the content of the grain growth-promoting element may be from 0.1 mol% to 1 mol% based on the total moles of transition metals in the transition metal precursor or the lithium transition metal oxide. More specifically, the content of Zr may be from 0.1 mol% to 0.3 mol%, the content of Al may be from 0.3 mol% to 0.8 mol%, and the content of B may be from 0.1 mol% to 1 mol%, based on the total moles of transition metals. The technical significance of introducing the grain growth-promoting element and adjusting its content is as described above, and thus is omitted here.

Next, the post-calcined lithium transition metal oxide is pulverized to form a lithium transition metal oxide comprising small-sized single particles formed of one primary particle and medium-sized quasi-single particles formed of a plurality of primary particles, whereby the positive electrode active material according to the present invention can be obtained.

At this time, the pulverization pressure may be from 2 bar to 4 bar. In addition, the stirring speed of the classifier during pulverization may be from 1,500 rpm to 3,000 rpm. When the pulverization pressure and classifier stirring speed satisfy the above ranges, the small-sized single particles and medium-sized quasi-single particles having the particle size distribution and particle number as targeted by the present invention can be more easily formed.

The positive electrode active material for a lithium secondary battery according to another embodiment of the present invention can form bimodal single particles and quasi-single particles through a simple process of precursor preparation, calcination, and pulverization. More specifically, in a conventional method for preparing bimodal positive electrode active materials, a small-particle precursor is subjected to a first calcination process to prepare a small-particle active material, and separately, a large-particle precursor is subjected to a second calcination process to prepare a large-particle active material. The small-particle and large-particle active materials are then mixed, thereby requiring multiple calcination processes and subsequent mixing processes. In contrast, the positive electrode active material according to the present invention can be manufactured through one calcination and pulverization without requiring separate calcination processes for small- and medium-sized active materials, thereby providing an advantage in process economy.

Optionally, after forming the lithium transition metal oxide comprising single particles formed of one primary particle and spherical single particles formed of a plurality of primary particles, a step of forming a coating layer comprising Co, Al, or a combination thereof may be further included. More specifically, the lithium transition metal oxide of the single particles may be mixed with a Co raw material, an Al raw material, or a combination thereof, followed by heat treatment to form a coating layer. The technical significance of forming the coating layer is as described above, and thus is omitted here.

Another embodiment of the present invention provides a positive electrode for a lithium secondary battery comprising the aforementioned positive electrode active material.

Another embodiment of the present invention provides a lithium secondary battery comprising the positive electrode. More specifically, the lithium secondary battery may comprise a positive electrode, a negative electrode, a separator, and an electrolyte.

In addition, the lithium secondary battery may further optionally comprise a battery case housing an electrode assembly of the positive electrode, the negative electrode, and the separator, and a sealing member for sealing the battery case.

Specifically, the positive electrode may comprise a positive electrode current collector and a positive electrode active material layer disposed on the positive electrode current collector, wherein the positive electrode active material layer comprises the aforementioned positive electrode active material. The positive electrode current collector is not particularly limited as long as it possesses conductivity without causing chemical changes in the battery, and examples thereof include stainless steel, aluminum, nickel, titanium, sintered carbon, or aluminum or stainless steel whose surface is treated with carbon, nickel, titanium, silver, and the like. The positive electrode current collector may typically have a thickness of 3 $\mu$m to 500 $\mu$m, and fine irregularities may be formed on its surface to improve adhesion of the positive electrode active material. For example, it may be used in various forms such as films, sheets, foils, nets, porous bodies, foams, or non-woven fabrics.

The positive electrode active material layer may comprise the aforementioned positive electrode active material together with a binder and/or a conductive material. The binder serves to improve adhesion between positive electrode active material particles and between the positive electrode active material and the positive electrode current collector. Specific examples include polyvinylidene fluoride (PVDF), vinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber (EPDM rubber), sulfonated EPDM, styrene-butadiene rubber (SBR), fluororubber, or various copolymers thereof, and mixtures of one or more thereof, but are not limited thereto. The binder may be included in an amount of 1 wt% to 30 wt% based on the total weight of the positive electrode active material layer.

The conductive material is used to impart conductivity to the electrode, and can be used without particular limitation so long as it possesses electronic conductivity without causing chemical changes in the battery. Specific examples include graphite such as natural graphite or artificial graphite; carbon-based materials such as carbon black, acetylene black, ketjen black, channel black, furnace black, lamp black, thermal black, or carbon fibers; metal powders or fibers such as copper, nickel, aluminum, or silver; conductive whiskers such as zinc oxide or potassium titanate; conductive metal oxides such as titanium oxide; or conductive polymers such as polyphenylene derivatives, and mixtures of one or more thereof, but are not limited thereto. The conductive material may typically be included in an amount of 1 wt% to 30 wt% based on the total weight of the positive electrode active material layer.

The positive electrode may be manufactured according to a conventional method for preparing a positive electrode, except for the use of the aforementioned positive electrode active material. Specifically, the positive electrode may be manufactured by applying, onto the positive electrode current collector, a composition for forming a positive electrode active material layer comprising the aforementioned positive electrode active material and optionally a binder, a conductive material, and a solvent, followed by drying and rolling. In this case, the types and contents of the positive electrode active material, binder, and conductive material are as described above.

The solvent may be a solvent commonly used in the art, such as dimethyl sulfoxide (DMSO), isopropyl alcohol, N-methylpyrrolidone (NMP), acetone, or water, and mixtures of one or more thereof may be used. The amount of solvent used should be sufficient to dissolve or disperse the positive electrode active material, conductive material, and binder, taking into consideration the slurry coating thickness and production yield, and to provide a viscosity capable of exhibiting excellent thickness uniformity during the coating process for manufacturing the electrode.

Alternatively, the positive electrode may be manufactured by casting the composition for forming a positive electrode active material layer onto a separate support, and then laminating, onto the positive electrode current collector, the film obtained by peeling the cast composition from the support.

The negative electrode may include a negative electrode current collector and a negative electrode active material layer disposed on the negative electrode current collector.

The negative electrode current collector is not particularly limited as long as it has high conductivity without causing chemical changes in the battery; examples include copper, stainless steel, aluminum, nickel, titanium, sintered carbon, copper or stainless steel whose surface is surface-treated with carbon, nickel, titanium, or silver, and aluminum-cadmium alloys. The negative electrode current collector may typically have a thickness of 3 to 500 μm and, similar to the positive electrode current collector, fine irregularities may be formed on the surface of the current collector to enhance the binding force of the negative electrode active material. For example, it may be used in various forms such as films, sheets, foils, nets, porous bodies, foams, or non-woven fabrics.

The negative electrode active material layer may include, together with the negative electrode active material, optionally a binder and a conductive material. By way of example, the negative electrode active material layer may be manufactured by applying onto the negative electrode current collector a composition for forming a negative electrode active material layer that includes a negative electrode active material and, optionally, a binder and a conductive material, followed by drying; or by casting the composition for forming the negative electrode onto a separate support, peeling the resulting film from the support, and laminating the film onto the negative electrode current collector.

As the negative electrode active material, a compound capable of reversibly intercalating and deintercalating lithium may be used. Specific examples include carbonaceous materials such as artificial graphite, natural graphite, graphitized carbon fibers, and amorphous carbon; metal compounds capable of alloying with lithium such as Si, Al, Sn, Pb, Zn, Bi, In, Mg, Ga, Cd, Si alloys, Sn alloys, or Al alloys; metal oxides capable of doping and dedoping lithium such as $SiO_\beta$ ($0 < \beta < 2$), $SnO_2$, vanadium oxides, and lithium vanadium oxides; or composites including the above metal compounds and carbonaceous materials such as Si-C composites or Sn-C composites, and one or a mixture of two or more thereof may be used.

In addition, a metal lithium thin film may be used as the negative electrode active material.

The carbonaceous material may include both low-crystallinity carbon and high-crystallinity carbon. Representative examples of low-crystallinity carbon include soft carbon and hard carbon, and representative examples of high-crystallinity carbon include high-temperature-calcined carbons such as natural graphite or artificial graphite in amorphous, plate-like, flake-like, spherical, or fibrous forms, kish graphite, pyrolytic carbon, mesophase pitch-based carbon fibers, meso-carbon microbeads, mesophase pitches, and petroleum- or coal-tar-pitch-derived cokes.

The binder and conductive material may be the same as those described above for the positive electrode.

The separator separates the negative electrode and the positive electrode and provides a pathway for lithium ions, and any separator commonly used in lithium secondary batteries may be employed without particular limitation; in particular, it is preferable to have low resistance to ion movement of the electrolyte and excellent electrolyte wettability. Specifically, a porous polymer film, for example, a porous polymer film made of a polyolefin-based polymer such as an ethylene homopolymer, propylene homopolymer, ethylene/butene copolymer, ethylene/hexene copolymer, or ethylene/methacrylate copolymer, or a laminate having two or more layers thereof, may be used. In addition, conventional porous non-woven fabrics, for example, non-woven fabrics made of high-melting-point glass fibers or polyethylene terephthalate fibers, may be used. Furthermore, to ensure heat resistance or mechanical strength, a coated separator containing a ceramic component or a polymer material may be used, optionally in a single-layer or multi-layer structure.

The electrolyte may include, but is not limited to, organic liquid electrolytes, inorganic liquid electrolytes, solid polymer electrolytes, gel-type polymer electrolytes, solid inorganic electrolytes, and molten inorganic electrolytes usable in manufacturing lithium secondary batteries. Specifically, the organic liquid electrolyte may include an organic solvent and a lithium salt.

As the organic solvent, any solvent that can serve as a medium through which ions involved in the electrochemical reactions of the battery can move may be used without particular limitation. Specific examples of the organic solvent include ester-based solvents such as methyl acetate, ethyl acetate, γ-butyrolactone, and ε-caprolactone; ether-based solvents such as dibutyl ether or tetrahydrofuran; ketone-based solvents such as cyclohexanone; aromatic hydrocarbonbased solvents such as benzene and fluorobenzene; carbonate-based solvents such as dimethyl carbonate (DMC), diethyl carbonate (DEC), methylethyl carbonate (MEC), ethylmethyl carbonate (EMC), ethylene carbonate (EC), and propylene carbonate (PC); alcohol-based solvents such as ethanol and isopropyl alcohol; nitriles such as R-CN (where R is a $C_2$ to $C_{20}$ linear, branched, or cyclic hydrocarbon group and may include a double-bonded aromatic ring or an ether linkage); amides such as dimethylformamide; dioxolanes such as 1,3-dioxolane; or sulfolanes, and mixtures of one or more thereof may be used.

Among these, carbonate-based solvents are preferred, and a mixture of cyclic carbonates (e.g., ethylene carbonate or propylene carbonate) having high ionic conductivity and high dielectric constant, which can enhance the charge/discharge performance of the battery, and linear carbonate compounds (e.g., ethylmethyl carbonate, dimethyl carbonate, or diethyl carbonate) having low viscosity is more preferred. In this case, the cyclic carbonate and the chain carbonate may be mixed at a volume ratio of about 1:1 to about 1:9 to provide excellent electrolyte performance.

The lithium salt may be used without particular limitation as long as it is a compound capable of providing lithium ions used in lithium secondary batteries. Specific examples of the lithium salt include $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$. The concentration of the lithium salt is preferably within the range of 0.1 to 2.0 M. When the concentration of the lithium salt is within the above range, the electrolyte can have appropriate conductivity and viscosity, thereby exhibiting excellent electrolyte performance and allowing lithium ions to move effectively.

In addition to the above electrolyte components, one or more additives may further be included for purposes such as improving battery life characteristics, suppressing battery capacity reduction, or enhancing battery discharge capacity. Examples include haloalkylene carbonate compounds such as difluoroethylene carbonate, pyridine, triethyl phosphate, triethanolamine, cyclic ethers, ethylenediamine, n-glyme (glyme), hexamethylphosphoramide, nitrobenzene derivatives, sulfur, quinone imine dyes, N-substituted oxazolidinones, N,N-substituted imidazolidines, ethylene glycol dialkyl ethers, ammonium salts, pyrrole, 2-methoxyethanol, or aluminum trichloride. In this case, the additive may be included in an amount of 0.1 wt% to 5 wt% based on the total weight of the electrolyte.

Another embodiment of the present invention provides a battery module including the lithium secondary battery as a unit cell, and a battery pack including the battery module.

The battery module or battery pack may be used as a power source for one or more medium- to large-scale devices such as power tools; electric vehicles (EVs), hybrid electric vehicles (HEVs), and plug-in hybrid electric vehicles (PHEVs); or power storage systems.

Hereinafter, embodiments of the present invention will be described in more detail through examples. However, the following examples are merely preferred embodiments of the present invention and are not intended to limit the present invention thereto.

**Example 1**

(1) Preparation of Positive Electrode Active Material

(Preparation of Transition Metal Hydroxide) A hydroxide having a composition of $(Ni_{0.96}Co_{0.03}Mn_{0.01})(OH)_2$ and an average particle diameter (D50) of 7 $\mu$m was prepared by a conventional coprecipitation method.

(Calcination) 200 g of the transition metal hydroxide was mixed with 90.556 g of $LiOH \cdot H_2O$ as a lithium raw material, 0.403 g of $ZrO_2$ and 0.850 g of $Al(OH)_3$ as grain growth promoters, followed by primary calcination at 860°C for 3.8 hours and secondary calcination at 790°C for 9.8 hours.

(Pulverization) Thereafter, the calcined product was pulverized at a pulverization pressure of 2 to 4 bar and a classifier stirring speed of 1,500 to 3,000 rpm to form a single-particle-type lithium transition metal oxide. At this time, per 1 mol of transition metal in the lithium transition metal oxide, the moles of lithium (Li), zirconium (Zr), and aluminum (Al) corresponded to 1.00 mol, 0.0015 mol, and 0.005 mol, respectively.

(Coating) Then, 130 g of the lithium transition metal oxide was mixed with 0.560 g of $LiOH \cdot H_2O$, 2.504 g of $Co(OH)_2$, and 0.189 g of $Al(OH)_3$ to prepare a mixture, which was heattreated at 650-700°C for 15 hours to prepare a positive electrode active material having a coating layer on the surface that included 2 mol% Co and 0.2 mol% Al.

(2) Fabrication of Lithium Secondary Battery

A slurry for electrode plate fabrication was prepared by mixing the above positive electrode active material : conductive agent (carbon black, Denka Black) : binder (PVDF, KF1100) at 96.5 : 1.5 : 2 wt%, and N-methyl-2-pyrrolidone (NMP) was added to adjust the viscosity so that the solids content was about 30%. The prepared slurry was coated onto an Al foil having a thickness of 15 $\mu$m using a doctor blade, followed by drying and rolling. The electrode loading amount was 15.0 mg/cm$^2$, and the rolling density (25°C, 20 kN) was 3.6 g/cm$^3$.

As the electrolyte, 1 M $LiPF_6$ in EC:DMC:EMC = 3:4:3 (vol%) with 3.0 vol% VC added was used, and a coin cell was fabricated using a PP separator and a lithium negative electrode (200 $\mu$m, Honzo Metal).

**Comparative Example 1**

Except that the pulverization step was not performed, a positive electrode active material and a lithium secondary battery were prepared in the same manner as in Example 1.

**Comparative Example 2**

(1) Preparation of Positive Electrode Active Material

(Preparation of Transition Metal Hydroxide) A hydroxide having a composition of $(Ni_{0.96}Co_{0.03}Mn_{0.01})(OH)_2$ and an average particle diameter (D50) of 3.5 $\mu$m was prepared by a conventional coprecipitation method.

(Calcination) 200 g of the transition metal hydroxide was mixed with 90.556 g of $LiOH \cdot H_2O$ as a lithium raw material, 0.403 g of $ZrO_2$ and 0.850 g of $Al(OH)_3$ as grain growth promoters, followed by primary calcination at 830°C for 3.8 hours and secondary calcination at 750°C for 9.8 hours.

(Pulverization) Thereafter, the calcined product was pulverized at a pulverization pressure of 1-4 bar and a classifier stirring speed of 3,000 to 5,000 rpm to form a single-particle-type lithium transition metal oxide. At this time, per 1 mol of transition metal in the lithium transition metal oxide, the moles of lithium (Li), zirconium (Zr), and aluminum (Al) corresponded to 1.00 mol, 0.0015 mol, and 0.005 mol, respectively.

(Coating) Then, 130 g of the lithium transition metal oxide was mixed with 0.560 g of $LiOH \cdot H_2O$, 2.504 g of $Co(OH)_2$, and 0.189 g of $Al(OH)_3$ to prepare a mixture, which was heattreated at 650-700°C for 15 hours to prepare a positive electrode active material having a coating layer on the surface that included 2 mol% Co and 0.2 mol% Al.

The lithium secondary battery was then fabricated in the same manner as in Example 1.

**Experimental Example 1: Observation of SEM Images of Active Materials**

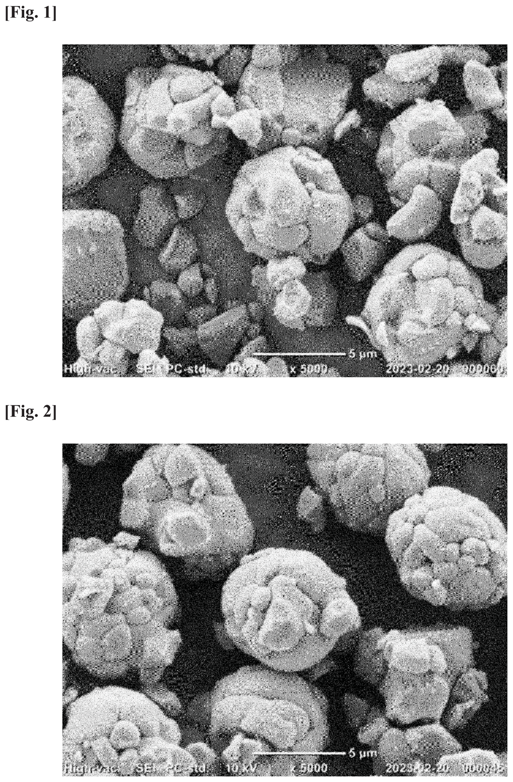

SEM (scanning electron microscopy) images of the positive electrode active materials prepared according to the Examples and Comparative Examples were observed and are shown in FIGS. 1 to 3 in the order of Example 1 and Comparative Examples 1 to 2, respectively.

Referring to FIGS. 1 to 3, in the case of Example 1, it was confirmed that both single particles formed of one primary particle and quasi-single particles formed of a plurality of primary particles were included. It was also confirmed that the single particles were smaller in particle size than the quasi-single particles. In addition, it was confirmed that the medium-sized quasi-single particles had an approximately spherical shape, whereas the single particles had an angular polyhedral shape.

In contrast, in Comparative Example 2 in which the pulverization process was not performed, it was confirmed that only medium-sized quasi-single particles were present. In addition, in Comparative Example 3, it was confirmed that the particle size was small and that only single particles were present.

**Experimental Example 2: Evaluation of Physical Properties of Active Material**

Various physical properties of the positive electrode active materials prepared according to the Example and the Comparative Examples were evaluated, and the results are summarized in Table 1 below.

(1) Evaluation of particle size distribution curve based on number

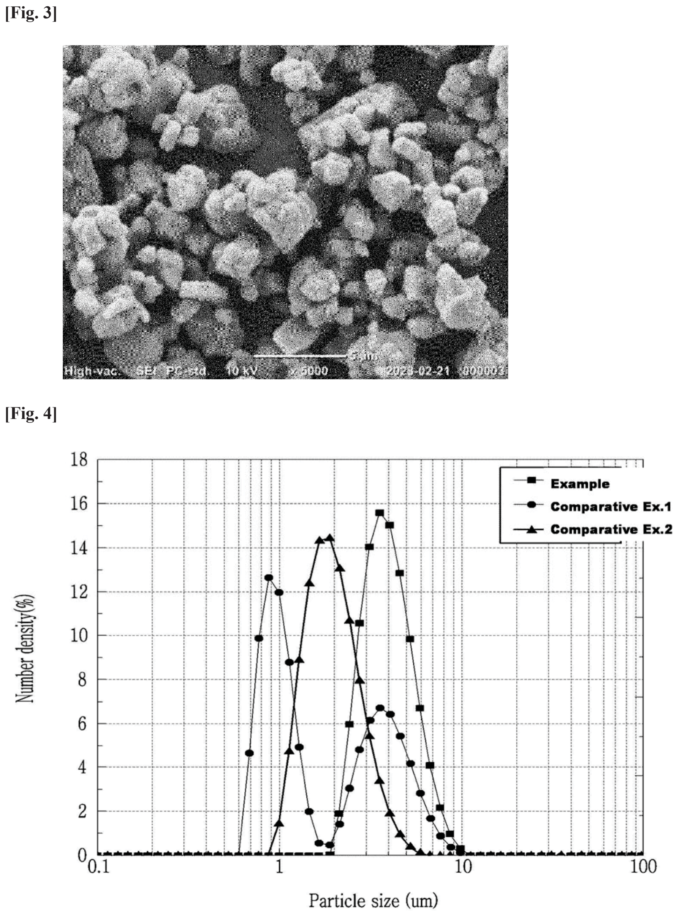

**[0118]** For the active material powder, a particle size distribution curve based on number was evaluated by the laser diffraction method, and the particle diameters corresponding to the maximum peaks of the small-size and medium-size ranges were measured. The results are shown in FIG. 4 and Table 1, respectively.

(2) Evaluation of volume-based average particle diameter (Dv50)

For the active material powder, the particle diameter corresponding to 50% of cumulative volume was measured by using the laser diffraction method.

(3) Evaluation of number-based particle diameters (Dn10, Dn50, Dn90)

For the active material powder, the particle diameters corresponding to 10%, 50%, and 90% of cumulative number were measured by using the laser diffraction method.

(4) Evaluation of Equation (1)

Based on the above results, a value of Equation (1), defined as the volume-based average particle diameter (Dv50) minus the number-based average particle diameter (Dn50), was calculated.

(5) Evaluation of compaction density (9 tons)

The density after application of a pressure of 9 tons was evaluated. Specifically, after loading 3 g of an active material sample into a pellet having a diameter of 13 mm and applying a pressure of 9 tons by using a hydraulic press manufactured by Caver, the density was determined from the change in pellet height before and after pressure application according to the following equation:

Density after application of 9 tons of pressure = weight of active material sample (3 g) / ($\Phi \times (1.3 \text{ cm} / 2)^2 \times$ (change in pellet height before and after pressure application))  [Calculation Formula 1]

In Calculation Formula 1, $\Phi$ denotes pi ($\pi$).

[Table 1]

| | Peak particle diameter on the particle size distribution curve ($\mu$m) | Dv50 ($\mu$m) | Dn10 ($\mu$m) | Dn50 ($\mu$m) | Dn90 ($\mu$m) | Calculation Formula 1 ($\mu$m) | **Comp**action densit y (9ton, g/cc) |
|---|---|---|---|---|---|---|---|
| Example 1 | 0.872, 3.12 | 5.67 | 0.822 | 1.35 | 5.2 | 4.32 | 3.68 |
| Compar ative example 1 | 3.55 | 5.77 | 2.82 | 4.1 | 6.41 | 1.67 | 3.55 |
| Compar ative example 2 | 1.88 | 3.08 | 1.35 | 2.02 | 3.29 | 1.06 | 3.50 |

With reference to Table 1, in Example 1-which is bimodal and satisfies the other specified conditions-the compaction density was high, indicating a prospect of improved electrode energy density. In contrast, in Comparative Examples 1 and 2, which consisted only of single particles or only of medium-sized quasi-single particles, respectively, the compaction density was found to be low. In addition, Example 1 exhibited appropriate peak particle diameters on the particle size distribution curve and the other physical properties were suitably obtained.

**Experimental Example 3: Evaluation of Electrochemical Properties of the Battery**

The electrochemical properties of the lithium secondary batteries manufactured according to the Example and the Comparative Examples were evaluated, and the results are shown in Table 2 below. The detailed test methods are as follows.

(1) Evaluation of initial charge and discharge capacities and initial efficiency

After fabricating a lithium secondary half-cell and aging it at 25 °C for 12 hours, charge-discharge testing was conducted. For the initial capacity evaluation, using 200 mAh g$^{-1}$ as the reference capacity, the cell was charged at a constant current of 0.1 C to 4.25 V and then switched to constant-voltage mode until the termination current reached 0.05 C. After charging, the cell was rested for 10 minutes, and then discharged at a constant current of 0.1 C (based on the 200 mAh g$^{-1}$ reference capacity) to 2.5 V.

(2) Evaluation of high-temperature capacity retention (45 °C, 50 cycles)

At 45 °C, the cell was charged at a constant current of 0.5 C to 4.25 V and then held at constant voltage until the termination current reached 0.05 C. After a 10-minute rest, the cell was discharged at a constant current of 1.0 C to 2.5 V. These charge-discharge conditions were repeated for 50 cycles, and capacity retention was calculated as the ratio of the 50th-cycle capacity to the first-cycle capacity.

(3) Evaluation of high-temperature resistance increase rate (45 °C, 50 cycles)

At 45 °C, the cell was charged at a constant current of 0.5 C to 4.25 V and then held at constant voltage until the termination current reached 0.05 C. After a 10-minute rest, the cell was discharged at a constant current of 1.0 C to 2.5 V. Under these cycling conditions for 50 cycles, the resistance increase rate was calculated relative to the first cycle.

[Table 2]

| Sample | Charge capacity (mAh g$^{-1}$, 0.1 C) | Discharge capacity (mAh g$^{-1}$, 0.1 C) | Initial efficiency (ICE, %) | High-temperature capacity retention (%, 50 cycles) | Hightemperatur e resistance increase rate (%, 50 cycles) |
|---|---|---|---|---|---|
| Example 1 | 244.0 | 212.5 | 87.1 | 93.8 | 70.1 |
| Compa rative exampl e 1 | 242.0 | 209.3 | 86.5 | 93.4 | 71.5 |
| Compa rative exampl e 2 | 243.4 | 216.7 | 89.0 | 91.5 | 76.1 |

With reference to Table 2, in Example 1-which includes small-sized single particles and medium-sized quasi-single particles and in which properties such as the maximum peak ranges on the particle size distribution curve, the number-based average particle diameter (Dn50), and the value of Equation (1) are appropriately controlled-the capacity, initial efficiency, and high-temperature cycle-life characteristics were all confirmed to be superior.

In contrast, in Comparative Example 1, in which properties such as the number-based average particle diameter (Dn50) and the value of Equation (1) fall outside the appropriate ranges, the capacity and charge/discharge efficiency were found to be inferior.

In addition, in Comparative Example 2, which has a small volume-based average particle diameter (Dv50), consists only of single particles, and in which properties such as the number-based average particle diameter (Dn50) and the value of Equation (1) are outside the appropriate ranges, the cycle-life characteristics were found to be inferior.

While the preferred embodiments of the present invention have been described above, the present invention is not limited thereto, and various modifications may be made within the scope of the appended claims, the detailed description, and the accompanying drawings. Accordingly, the substantive scope of the present invention shall be defined by the appended claims and their equivalents.

**Claims**

1. A positive electrode active material for a lithium secondary battery, which is a single-particle-type nickel-containing layered lithium transition metal oxide,

   wherein the positive electrode active material has a volume-based average particle diameter (Dv50) of from 5 μm to 8 μm,
   comprises small-sized single particles formed of one primary particle and medium-sized quasi-single particles formed of a plurality of primary particles, and
   exhibits peaks in a particle size distribution curve based on number in a particle diameter range of from 0.7 μm to 1.2 μm and in a particle diameter range of from 2.5 μm to 4.0 μm.

2. The positive electrode active material of claim 1, wherein the number-based average particle diameter (Dn50) is 1.6 μm or less.

3. The positive electrode active material of claim 1, wherein the following equation (1) is satisfied:

   [Equation 1]

   $$Dv50 - Dn50 \geq 3.5 \ \mu m$$

4. The positive electrode active material of claim 1, wherein a compaction density after application of a pressure of 9 tons is 3.6 g/cc or greater.

5. The positive electrode active material of claim 1, wherein a number ratio of the single particles to the quasi-single particles is from 8:2 to 5:5.

6. The positive electrode active material of claim 1, wherein the lithium transition metal oxide comprises 60 mol% or more of nickel based on the total moles of transition metals.

7. The positive electrode active material of claim 1, wherein the lithium transition metal oxide further comprises a grain growth-promoting element selected from Zr, Al, B, or a combination thereof.

8. The positive electrode active material of claim 7, wherein a content of the grain growth-promoting element is from 0.1 mol% to 1 mol% based on the total moles of transition metals.

9. The positive electrode active material of claim 1, wherein the positive electrode active material further comprises a coating layer disposed on the lithium transition metal oxide, the coating layer comprising Co, Al, or a combination thereof.

10. The positive electrode active material of claim 1, wherein the lithium transition metal oxide is represented by the following Chemical Formula 1:

[Chemical Formula 1] $Li_a[Ni_xCo_yMnzM_1w_1M_2w_2]O_2$

wherein $0.8 \leq a \leq 1.2$, $0.60 \leq x < 1$, $0 \leq y \leq 0.4$, $0 \leq z \leq 0.4$, $0 \leq w_1 \leq 0.01$, $0 \leq w_2 \leq 0.2$, and $x + y + z + w_1 + w_2 = 1$;
$M_1$ is Zr, Al, B, or a combination thereof; and
$M_2$ is Y, Mg, Ti, Nb, W, Sc, Si, V, Fe, Y, Mo, Ce, Hf, Ta, La, Sr, or a combination thereof.

11. A positive electrode for a lithium secondary battery, comprising the positive electrode active material of any one of claims 1 to 10.

12. A lithium secondary battery comprising the positive electrode of claim 11.

[Fig. 1]

[Fig. 2]

[Fig. 3]

[Fig. 4]

## INTERNATIONAL SEARCH REPORT

| International application No. |
|---|
| **PCT/KR2024/003421** |

| A. | CLASSIFICATION OF SUBJECT MATTER |
|---|---|

**H01M 4/525**(2010.01)i; **H01M 4/505**(2010.01)i; **H01M 4/38**(2006.01)i; **H01M 4/36**(2006.01)i; **H01M 4/62**(2006.01)i; **H01M 4/131**(2010.01)i; **H01M 4/02**(2006.01)i

According to International Patent Classification (IPC) or to both national classification and IPC

| B. | FIELDS SEARCHED |
|---|---|

Minimum documentation searched (classification system followed by classification symbols)

H01M 4/525(2010.01); H01M 10/052(2010.01); H01M 4/131(2010.01); H01M 4/1315(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 리튬전이금속산화물(lithium transition metal oxide), 입경(particle size), 단입자(single particle), 1차 입자(primary particle), 2차 입자(secondary particle), 코팅(coating), 압축 밀도(tapped density)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2020-0117977 A (SUMITOMO CHEMICAL CO., LTD.) 14 October 2020 (2020-10-14)<br>See claims 1, 6 and 7; paragraphs [0014]-[0016], [0050], [0086]-[0088], [0094]-[0099], [0172]-[0179], [0190]-[0196], [0237], [0277], [0279]-[0281], [0308]-[0312], [0319], [0523] and [0550]; and tables 1 and 2. | 1-12 |
| A | KR 10-2020-0001230 A (SAMSUNG ELECTRONICS CO., LTD.) 06 January 2020 (2020-01-06)<br>See entire document. | 1-12 |
| A | KR 10-2022-0066232 A (ECOPRO BM CO., LTD.) 24 May 2022 (2022-05-24)<br>See entire document. | 1-12 |
| A | KR 10-2021-0079178 A (LG ENERGY SOLUTION, LTD.) 29 June 2021 (2021-06-29)<br>See entire document. | 1-12 |

✓ Further documents are listed in the continuation of Box C.　　✓ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 June 2024** | **26 June 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/003421**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2021-0052320 A (SAMSUNG SDI CO., LTD.) 10 May 2021 (2021-05-10)<br>See entire document. | 1-12 |

Form PCT/ISA/210 (second sheet) (July 2022)

**INTERNATIONAL SEARCH REPORT**
Information on patent family members

International application No.

**PCT/KR2024/003421**

| Patent document cited in search report | | | Publication date (day/month/year) | Patent family member(s) | | | Publication date (day/month/year) |
|---|---|---|---|---|---|---|---|
| KR | 10-2020-0117977 | A | 14 October 2020 | CN | 111971821 | A | 20 November 2020 |
| | | | | EP | 3920275 | A1 | 08 December 2021 |
| | | | | EP | 3920275 | A4 | 01 June 2022 |
| | | | | JP | 2020-167042 | A | 08 October 2020 |
| | | | | JP | 6650064 | B1 | 19 February 2020 |
| | | | | KR | 10-2247128 | B1 | 30 April 2021 |
| | | | | US | 2020-0313183 | A1 | 01 October 2020 |
| | | | | WO | 2020-202708 | A1 | 08 October 2020 |
| KR | 10-2020-0001230 | A | 06 January 2020 | CN | 112189268 | A | 05 January 2021 |
| | | | | EP | 3762985 | A1 | 13 January 2021 |
| | | | | EP | 3762985 | A4 | 29 September 2021 |
| | | | | KR | 10-2553570 | B1 | 10 July 2023 |
| | | | | US | 11489150 | B2 | 01 November 2022 |
| | | | | US | 2020-0006758 | A1 | 02 January 2020 |
| | | | | WO | 2020-004882 | A1 | 02 January 2020 |
| KR | 10-2022-0066232 | A | 24 May 2022 | CN | 114203981 | A | 18 March 2022 |
| | | | | EP | 3965183 | A1 | 09 March 2022 |
| | | | | JP | 2022-042478 | A | 14 March 2022 |
| | | | | JP | 2023-118940 | A | 25 August 2023 |
| | | | | KR | 10-2022-0030027 | A | 10 March 2022 |
| | | | | KR | 10-2397756 | B1 | 13 May 2022 |
| | | | | KR | 10-2511736 | B1 | 20 March 2023 |
| | | | | US | 2022-0069289 | A1 | 03 March 2022 |
| KR | 10-2021-0079178 | A | 29 June 2021 | CN | 114747041 | A | 12 July 2022 |
| | | | | EP | 4047679 | A1 | 24 August 2022 |
| | | | | JP | 2023-503075 | A | 26 January 2023 |
| | | | | JP | 2024-040214 | A | 25 March 2024 |
| | | | | JP | 7427783 | B2 | 05 February 2024 |
| | | | | US | 2023-0155123 | A1 | 18 May 2023 |
| | | | | WO | 2021-125535 | A1 | 24 June 2021 |
| KR | 10-2021-0052320 | A | 10 May 2021 | CN | 112751025 | A | 04 May 2021 |
| | | | | EP | 3817105 | A1 | 05 May 2021 |
| | | | | KR | 10-2424399 | B1 | 22 July 2022 |
| | | | | US | 2021-0135215 | A1 | 06 May 2021 |

Form PCT/ISA/210 (patent family annex) (July 2022)